# EUROPÄISCHE PATENTSCHRIFT

(11) **EP 3 025 807 B1**
(45) Veröffentlichungstag und Bekanntmachung des Hinweises auf die Patenterteilung: **03.07.2019**
(21) Anmeldenummer: 15195802.2
(22) Anmeldetag: 23.11.2015
(51) Int. Cl.: B21J 15/04, B21J 15/10, B21J 15/20, B25B 27/00

(54) **NIETWERKZEUG**
RIVETING TOOL
OUTIL DE RIVETAGE

(30) Priorität: 27.11.2014 DE 102014117401
(43) Veröffentlichungstag der Anmeldung: 01.06.2016
(73) Patentinhaber: TKR Spezialwerkzeuge GmbH, 58285 Gevelsberg (DE)
(72) Erfinder: Weyland, Thorsten, 58313 Herdecke (DE)
(74) Vertreter: Kalkoff & Partner

(56) Entgegenhaltungen:
- EP-A2- 0 927 585
- EP-A2- 0 940 227
- EP-A2- 1 400 190
- EP-A2- 2 786 843
- DE-A1-102010 054 251
- DE-A1-102012 101 894
- DE-U1- 29 502 918
- DE-U1-202006 014 717
- DE-U1-202011 005 601
- US-A- 4 462 240

## Beschreibung

Die Erfindung betrifft ein Nietwerkzeug zum Setzen von Blindnietmuttern und/oder Blindnietschrauben, mit
- einem hydraulisch zwischen einer Ausgangsposition und einer Endposition verstellbaren Antriebskolben und
- einem mit dem Antriebkolben in Wirkverbindung befindlichen, zwischen einer Nietaufnahmeposition und einer Setzposition verstellbaren Zugdorn.
Bei Blindnietmuttern und/oder Blindnietschrauben handelt es sich um Nieten mit Gewinden, die z. B. dann eingesetzt werden, wenn eine Unterseite, eine Innenseite oder eine Rückseite eines Bauteils nicht oder nur schwer zugänglich ist, wie dies bspw. bei Rohren der Fall ist. Blindnietmuttern und/oder Blindnietschrauben werden insbesondere dazu verwendet, um an Bauteilen Gewinde anzubringen, die eine zu geringe Wandstärke besitzen, um das Einschneiden von Gewinden zu ermöglichen.

Nietwerkzeuge der eingangs genannten Art (Siehe DE 20 2006 014 717 U1, die die Basis für den Oberbegriff des Anspruchs 1 bildet) werden dazu verwendet, um die Blindnietmuttern und/oder Blindnietschrauben in komfortabler Weise an dem jeweiligen Bauteil zu befestigen. In Abhängigkeit von der zu setzenden Niete wird dabei der zwischen der Nietaufnahmeposition und der Setzposition verstellbare Zugdorn mit einem Ziehwerkzeug verbunden, welches eines an die jeweils zu setzende Niete angepasstes Innen- oder Außengewinde aufweist. Zum Setzen der Blindnietmutter und/oder der Blindnietschraube wird diese auf das Ziehwerkzeug aufgeschraubt, in die Öffnung des Bauteils zur Aufnahme des Niets eingesetzt und durch den Hub des Nietwerkzeugs gesetzt.

Um mit einem Nietwerkzeug unterschiedliche Blindnietmuttern und/oder Blindnietschrauben setzen zu können, ist es erforderlich, das Nietwerkzeug derart auszubilden, dass es mit unterschiedlichen, an die zu setzenden Blindnietmuttern und/oder Schrauben angepassten Ziehwerkzeugen verwendet werden kann. Die Ziehwerkzeuge müssen dabei in einfacher Weise mit dem Zugdorn koppelbar sein, um eine gute Einsetzbarkeit des Nietwerkzeugs zu gewährleisten. Bekannte Nietwerkzeuge mit hydraulisch angetriebenen Antriebskolben der eingangs genannten Art weisen jedoch den Nachteil auf, dass diese aufgrund der Komplexität der hydraulischen Antriebseinheit überhaupt keinen und sofern möglich, nur einen sehr eingeschränkten und umständlichen Wechsel des Ziehwerkzeugs ermöglichen.

Der Erfindung liegt die Aufgabe zugrunde, ein Nietwerkzeug mit einem hydraulisch angetriebenen Antriebskolben bereit zu stellen, das eine einfache und gute Anpassbarkeit an die zu setzenden Blindnietschrauben und/oder Blindnietmuttern aufweist.

Die Erfindung löst die Aufgabe durch ein Nietwerkzeug mit den Merkmalen des Anspruchs 1. Vorteilhafte Weiterbildungen der Erfindung sind in den abhängigen Ansprüchen angegeben.

Gemäß der Erfindung ist vorgesehen, dass durch die Verwendung einer Kopplungseinheit ein einfacher Austausch des Ziehwerkzeugs erfolgen kann. Die Kopplungseinheit, der Zugdorn sowie das jeweilige Ziehwerkzeug sind dabei derart aufeinander abgestimmt, dass im montierten Zustand der Zugdorn und das Ziehwerkzeug sowohl in Längsachsenrichtung als auch in Umfangsrichtung formschlüssig miteinander verbunden sind. Die formschlüssige Verbindung in Längsachsenrichtung, nämlich in Verstellrichtung des Antriebskolbens, gewährleistet zuverlässig, dass die Bewegungen des Antriebskolbens über den Zugdorn auf das Ziehwerkzeug übertragen werden, so dass der zum Setzen der Blindnietmutter oder Blindnietschraube erforderliche Hub von dem Ziehwerkzeug auf den Niet aufgebracht wird.

Die formschlüssige Verbindung zwischen Ziehwerkzeug und Zugdorn in Umfangsrichtung ermöglicht es, Drehbewegungen des Zugdorns um die Längsachse von dem Zugdorn auf das Ziehwerkzeug zu übertragen. Somit kann durch ein Verdrehen des Zugdorns das Ziehwerkzeug insbesondere nach dem Setzvorgang von der gesetzten Blindnietmutter und/oder Blindnietschraube in einfacher Weise gelöst werden. Darüber hinaus kann die Übertragbarkeit der Drehbewegung auch dazu genutzt werden, um über eine Verdrehung des Zugdorns die zu setzende Blindnietmutter und/oder Blindnietschraube vor dem Setzvorgang auf dem Ziehwerkzeug anzuordnen. Eine Übertragung der Bewegung von dem Zugdorn auf das Ziehwerkzeug in Längachsenrichtung erfolgt in der Regel über die Kopplungseinheit. Diese kann auch zur Übertragung der Bewegung in Umfangsrichtung ausgebildet sein, wobei der hierfür erforderliche Formschluss auch unmittelbar zwischen Zugdorn und Ziehwerkzeug hergestellt werden kann.

Das erfindungsgemäße Nietwerkzeug zeichnet sich somit dadurch aus, dass über die Kopplungseinheit eine einfache und schnelle Auswechselbarkeit des Ziehwerkzeugs gegeben ist, wobei aufgrund eines Zusammenwirkens der Kopplungseinheit, des Ziehwerkzeugs und des Zugdorns eine zuverlässige Übertragung der Verstellbewegung des Zugdorns in Längsachsenrichtung sowie Umfangsrichtung ermöglicht wird.

Die Ausgestaltung der Kopplungseinheit ist dabei grundsätzlich frei wählbar, wobei diese im Bereich eines Verbindungsabschnitts von Ziehwerkzeug und Zugdorn, in deren Bereich die Kopplungseinheit mit dem Ziehwerkzeug und dem Zugdorn verbunden ist, an die Ausgestaltung von Zugdorn und Ziehwerkzeug angepasst sein muss, um zumindest einen Formschluss in Längachsenrichtung herzustellen. Das erfindungsgemäße Nietwerkzeug sieht vor, dass die Kopplungseinheit zwei Koppelhalbschalen aufweist, die zur in Längsachsenrichtung formschlüssigen Verbindung des Zugdorns mit dem Ziehwerkzeug ausgebildet sind. Die Ausgestaltung der Kopplungseinheit mit zwei Koppelhalbschalen ermöglicht einen besonders einfachen und schnellen Austausch des Ziehwerkzeugs. Die Koppelhalbschalen sind dabei derart ausgebildet, dass diese derart mit dem Zugdorn und dem Ziehwerkzeug zusammenwirken, dass durch die Koppelhalbschalen ein Formschluss in Längsachsenrichtung hergestellt wird.

Ein Wechsel des Ziehwerkzeugs kann in einfacher Weise dadurch realisiert werden, dass das Ziehwerkzeug in eine der Koppelhalbschalen eingesetzt und anschließend die Kopplungseinheit durch Aufsetzen der anderen Koppelhalbschale auf das Ziehwerkzeug und den Zugdorn geschlossen wird, so dass der Zugdorn und das Ziehwerkzeug axial zu den ringförmig angeordneten Koppelhalbschalen verlaufen. Die Koppelhalbschalen bewirken dabei zumindest eine formschlüssige Verbindung von Zugdorn und Ziehwerkzeug in Längsachsenrichtung, so dass die durch den Antriebskolben erzeugte Linearbewegung auf das Ziehwerkzeug übertragen wird. Darüber hinaus können die Koppelhalbschalen auch zur Herstellung der formschlüssigen Verbindung in Umfangsrichtung genutzt werden, bspw. wenn diese mit in Längsachsenrichtung verlaufenden Stegen ausgebildet sind, welche mit entsprechenden Nuten an dem Ziehwerkzeug und dem Zugdorn zusammenwirken.

Die grundsätzliche Ausgestaltung der Koppelhalbschalen, des Zugdorns sowie des Ziehwerkzeugs derart, dass diese über die Koppelhalbschalen eine zumindest in Längsachsenrichtung formschlüssige Verbindung aufweisen, ist grundsätzlich frei wählbar. Nach einer besonders vorteilhaften Ausgestaltung der Erfindung ist jedoch vorgesehen, dass der Zugdorn und das Ziehwerkzeug in dem Koppelabschnitt ringförmig umlaufenden Nuten und die Koppelhalbschalen mit den Nuten in Eingriff bringbare Stege aufweisen. Gemäß dieser Ausgestaltung der Erfindung umschließen die Koppelhalbschalen das Ziehwerkzeug und den Zugdorn in einem Verbindungsabschnitt koaxial, wobei von den Koppelhalbschalen in Richtung auf das Ziehwerkzeug und den Zugdorn vorstehende, ringförmig umlaufende Stege in entsprechende ringförmige Nuten an dem Zugdorn und dem Ziehwerkzeug im Verbindungsabschnitt eingreifen. Die Anzahl der zusammenwirkenden Nuten und Stege kann dabei grundsätzlich frei gewählt werden. Diese Ausgestaltung stellt in jedem Falle eine einfache und zuverlässige formschlüssige Verbindung in Längsachsenrichtung dar. Zudem kann gemäß dieser Weiterbildung der Erfindung das Ziehwerkzeug in einfacher Weise gewechselt werden.

Wie bereits vorstehend ausgeführt, kann die Kopplungseinheit zudem auch derart ausgebildet sein, dass sie neben einer formschlüssigen Verbindung des Zugdorns mit dem Ziehwerkzeug in Längsachsenrichtung auch eine formschlüssige Verbindung von Ziehwerkzeug und Zugdorn in Umfangsrichtung bewirkt. Nach einer vorteilhaften Weiterbildung der Erfindung ist jedoch vorgesehen, dass im Kontaktbereich von Ziehwerkzeug und Zugdorn an dem einen von Ziehwerkzeug und Zugdorn ein quer zur Längsachsenrichtung verlaufender Steg und an dem anderen von Ziehwerkzeug und Zugdorn eine korrespondierend ausgebildete, quer zur Längsachsenrichtung verlaufende Nut angeordnet ist.

Gemäß dieser Ausgestaltung der Erfindung erfolgt die in Umfangsrichtung formschlüssige, d. h. verdrehfeste Verbindung von Zugdorn und Ziehwerkzeug dadurch, dass zumindest ein Steg mit zumindest einer an den Steg angepasste Nut zusammenwirkt. Der in die Nut eingreifende Steg bewirkt aufgrund seiner Ausrichtung quer zur Längsachsenrichtung eine zuverlässige verdrehfeste Verbindung zwischen dem Zugdorn und dem Ziehwerkzeug. Die Ausrichtung des Stegs sowie der Nut sowie deren Anzahl quer zur Längsachsenrichtung ist dabei grundsätzlich frei wählbar. So können bspw. die Stege kreuzförmig angeordnet sein, wodurch eine besonders zuverlässige verdrehfeste Verbindung erzielt wird. Der Kontaktbereich des Zugdorns und des Ziehwerkzeugs ist dabei der Abschnitt, an dem diese beiden Bauteile im montierten Zustand aneinander anliegen.

Eine zuverlässige Ausrichtung des Ziehwerkzeugs gegenüber dem Zugdorn kann bereits durch den Antriebskolben und/oder die Kopplungseinheit, insbesondere die miteinander verbundenen Koppelhalbschalen erzielt werden. Nach einer besonders vorteilhaften Ausgestaltung der Erfindung ist jedoch vorgesehen, dass im Kontaktbereich von Ziehwerkzeug und Zugdorn ein mit dem Ziehwerkzeug und dem Zugdorn in Eingriff bringbarer Zentrierstift angeordnet ist. Der Zentrierstift, welcher mit einem Abschnitt in einer Öffnung des Zugdorns und mit einem anderen Abschnitt in einer Öffnung des Ziehwerkzeugs angeordnet sein kann, ermöglicht eine besonders zuverlässige Ausrichtung des Zugdorns gegenüber dem Ziehwerkzeug. Auch ist es möglich, den Zentrierstift an einem von Zugdorn oder Ziehwerkzeug zu verankern und an dem anderen von Ziehwerkzeug und Zugdorn eine dem Zentrierstift entsprechende Öffnung vorzusehen, in die der Zentrierstift in der montierten Lage eingreift.

Zum Setzen einer Blindnietmutter und/oder Blindnietschraube bewirkt der Antriebskolben bei einer Verstellung aus seiner Ausgangsposition in seine Endposition eine Verlagerung des Zugdorns und des mit dem Zugdorn verbundenen Ziehwerkzeugs aus der Nietaufnahmeposition in eine Setzposition. Nach Beendigung des Setzvorgangs wird dann das Ziehwerkzeug durch Verdrehen von Zugdorn und Ziehwerkzeug von der Blindnietmutter bzw. Blindnietschraube gelöst. Dieser Trennvorgang kann in besonders einfacher Weise dann ausgeführt werden, wenn der Zugdorn in der Aufnahmeposition angeordnet ist. Um eine zuverlässige Anordnung des Ziehwerkzeugs in der Nietaufnahmeposition zu gewährleisten ist daher nach einer vorteilhaften Weiterbildung der Erfindung vorgesehen, dass der Zugdorn in Richtung auf die Nietaufnahmeposition und/oder der Antriebskolben in Richtung auf die Ausgangsposition vorgespannt ist. Die Art der Vorspannung kann dabei grundsätzlich in beliebiger Weise erfolgen, wobei diese in einer besonders bevorzugten Weise durch eine Schraubendruckfeder hervorgerufen werden kann, welche endseitig bspw. an einem Flansch des Zugdorns und an der dem Flansch gegenüberliegenden Seite bspw. an einer mit dem Grundkörper verbundenen Gewindehülse abgestützt ist. Im Falle der Anordnung des Flansches an einer Anschlagfläche des Antriebskolbens wird dadurch gewährleistet, dass durch die Federvorspannung der Antriebskolben und der Zugdorn im unbelasteten Zustand in der Nietaufnahmeposition des Zugdorns angeordnet sind.

Die Ausgestaltung der Wirkverbindung des Antriebskolbens mit dem Zugdorn ist grundsätzlich frei wählbar. Nach einer besonders vorteilhaften Ausgestaltung der Erfindung ist jedoch vorgesehen, dass der Zugdorn in einer Durchgangsöffnung des Antriebskolbens angeordnet und in Richtung auf die Nietaufnahmeposition formschlüssig mit diesem verbunden ist. Gemäß dieser Ausgestaltung der Erfindung weist der Antriebskolben eine in Längsachsenrichtung verlaufende Durchgangsöffnung auf, innerhalb derer der Zugdorn anordbar ist. Die Anordnung des Zugdorns erfolgt dabei derart, dass dieser in Richtung auf die Nietaufnahmeposition formschlüssig mit dem Antriebskolben verbunden ist. Demnach bewirkt eine Verlagerung des Zugdorns in Richtung auf die Nietaufnahmeposition eine Verlagerung des unbelasteten Antriebskolbens in Richtung auf dessen Ausgangsposition. In gleicher Weise bewirkt bei dieser Ausgestaltung der Erfindung eine Verlagerung des Antriebskolbens in Richtung auf die Endposition eine Verlagerung des Zugdorns aus der Nietaufnahmeposition in die Setzposition.

Die Anordnung des Antriebskolbens in der Durchgangsöffnung ermöglicht es, das Nietwerkzeug in einer besonders kompakten Bauform auszugestalten. Die gemäß dieser Ausgestaltung der Erfindung formschlüssige Verbindung von Antriebskolben und Zugdorn gewährleistet darüber hinaus eine hohe Funktionssicherheit bei vergleichsweise einfachem Aufbau.

Die Anordnung einer zu setzenden Blindnietmutter und/oder Blindnietschraube an dem Ziehwerkzeug kann grundsätzlich durch einfaches Aufschrauben der Blindnietmutter und/oder Blindnietschraube auf das Ziehwerkzeug erfolgen. Nach dem Setzvorgang ist zum Trennen des Nietwerkzeugs von der gesetzten Blindnietmutter und/oder Blindnietschraube ein Verdrehen des Ziehwerkzeugs erforderlich, wobei eine solche Drehbewegung über den Zugdorn auf das Ziehwerkzeug übertragen wird. Die Erzeugung der Drehbewegung des Zugdorns kann dabei in beliebiger Weise erfolgen.

Nach einer besonders vorteilhaften Ausgestaltung der Erfindung ist jedoch vorgesehen, dass der Zugdorn zur in Längsachsenrichtung verschiebbaren und verdrehfesten Verbindung mit einem mit einem Drehrad verbundenen Führungsstift verbunden ist. Gemäß dieser Ausgestaltung der Erfindung weist das Nietwerkzeug einen mit einem Drehrad verbundenen Führungsstift auf, wobei der Führungsstift verdrehfest mit dem Zugdorn verbunden ist. Eine Verdrehung des Drehrads bewirkt somit eine Verdrehung des Zugdorns und damit wiederum eine Verdrehung des Ziehwerkzeugs. Vorteilhafterweise ist dabei der Führungsstift derart mit dem Zugdorn verbunden, dass der Zugdorn relativ gegenüber dem Führungsstift in Längsachsenrichtung verstellbar ist. Dies ermöglicht es, ohne eine axiale Verlagerung des Führungsstifts den Zugdorn in Längsachsenrichtung zwischen dessen Nietaufnahmeposition und der Setzposition zu verstellen, wobei dabei der Zugdorn relativ gegenüber dem Führungsstift in Längsachsenrichtung verstellt wird.

Diese Ausgestaltung der Erfindung ermöglicht somit eine kompakte Bauform des Nietwerkzeugs. Eine besonders einfache Ausführungsform stellt dabei eine Verbindung zwischen Zugdorn und Führungsstift dar, bei der der Führungsstift eine Längsnut aufweist, durch die sich ein mit dem Zugdorn verbundener Sicherungsbolzen erstreckt. Über den Sicherungsbolzen können somit Drehbewegungen des Führungsstifts zuverlässig auf den Zugdorn und damit auf das Ziehwerkzeug übertragen werden. Gleichzeitig kann hierdurch eine Baugruppe bestehend aus Zugdorn, Führungsstift, Drehrad und ggf. Federelement geschaffen werden, die als montierte Einheit gemeinsam von dem Nietwerkzeug zum Zwecke des Wechsels des Nietwerkzeugs einfach gelöst werden kann. Eine umständliche Handhabung der Einzelteile ist nicht erforderlich, so dass ein schneller Wechsel des Nietwerkzeugs erfolgen kann.

Eine Führung des Ziehwerkzeugs während des Setzvorgangs kann grundsätzlich in beliebiger Weise realisiert werden. Nach einer besonders vorteilhaften Ausgestaltung der Erfindung ist jedoch vorgesehen, dass die Koppelhalbschalen im montierten Zustand in einer an einem Gehäuse des Nietwerkzeugs angeordneten Führungshülse verschiebbar gelagert sind. Das den Grundkörper des Nietwerkzeugs bildende Gehäuse, welches auch dazu genutzt werden kann, um den Hydraulikzylinder zwischen seiner Ausgangsposition und seiner Endposition zu führen und dabei für den Hydraulikkolben einen Zylinderraum bereit stellt, ermöglicht eine einfache Aufnahme einer Führungshülse, welche mit ihrer Innenfläche an die Abmessungen der durch die Koppelhalbschalen gebildeten Kopplungseinheit angepasst ist und damit zur Führung dient. Die Führungshülse kann dabei auch derart ausgebildet sein, dass sie mit einem Anschlag für die Koppelhalbschalen die Ausgangsposition des Antriebskolbens festlegt. Die Führungshülse kann bspw. in das Gehäuse direkt eingeschraubt oder unter Verwendung von geeigneten, mit dem Gehäuse verbundenen Hülseaufnahmen an diesem befestigt sein.

Zur Durchführung des Setzvorgangs ist es erforderlich, dass an dem Nietwerkzeug ein an das Ziehwerkzeug sowie die zu setzende Blindnietmutter und/oder Blindnietschraube angepasster Nietkopf angeordnet ist. Nach einer besonders vorteilhaften Ausgestaltung ist dabei vorgesehen, dass die Führungshülse eine Nietkopfaufnahme mit in der Nietkopfaufnahme angeordneten Haltemagneten aufweist. Diese Ausgestaltung der Erfindung erlaubt einen einfachen und schnellen Wechsel des Nietkopfs zur Anpassung an das zu verwendende Ziehwerkzeug. Die Verwendung von Haltemagneten gewährleistet dabei eine sichere Anordnung der verschiedenen Nietköpfe in der Nietkopfaufnahme der Führungshülse, wobei hierzu die Haltemagnete bspw. koaxial um eine Durchgangsöffnung für das Ziehwerkzeug angeordnet sein können.

Die Verbindung des Gehäuses mit bspw. dem Drehrad und/oder der Führungshülse kann, wie bereits vorstehend dargelegt, in beliebiger Weise erfolgen. Nach einer besonders vorteilhaften Ausgestaltung der Erfindung ist jedoch vorgesehen, dass das mit einer Hydraulikleitung verbindbare und zur Führung des Antriebskolbens eine Zylinderinnenfläche aufweisende zylindrische Gehäuse einerseits oder beiderseits ein Innengewinde aufweist.

Die Anordnung von Innengewinden erlaubt es in besonders einfacher Weise, das Nietwerkzeug über das Gehäuse, das mit einer Zylinderinnenfläche zur Führung des Antriebskolbens dient, den unterschiedlichen Einsatzzwecken entsprechend anzupassen. Ein Wechsel der Anbauteile an das Gehäuse lässt sich schnell und einfach bewerkstelligen. Zum Antrieb des Antriebskolbens ist das Gehäuse derart mit einem Anschlussstutzen für eine Hydraulikleitung verbunden, das eine Druckerhöhung eine Verlagerung des Antriebskolbens aus der Ausgangsposition in die Endposition bewirkt.

Ein Ausführungsbeispiel der Erfindung wird nachstehend mit Bezug auf die Zeichnungen erläutert. In den Zeichnungen zeigen:
- Fig. 1: eine Explosionsdarstellung eines Nietwerkzeugs und
- Fig. 2: eine Ansicht eines Schnitts des Nietwerkzeugs von Fig. 1.

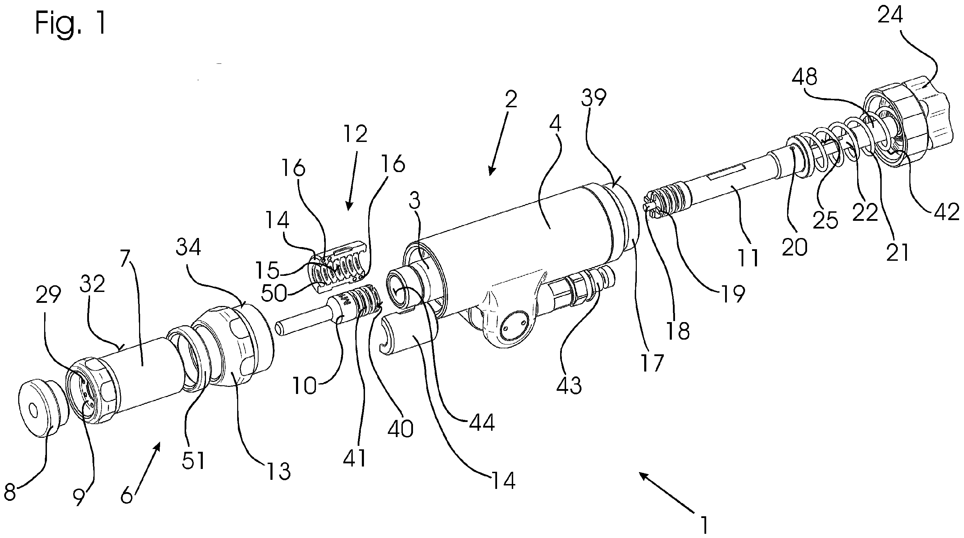

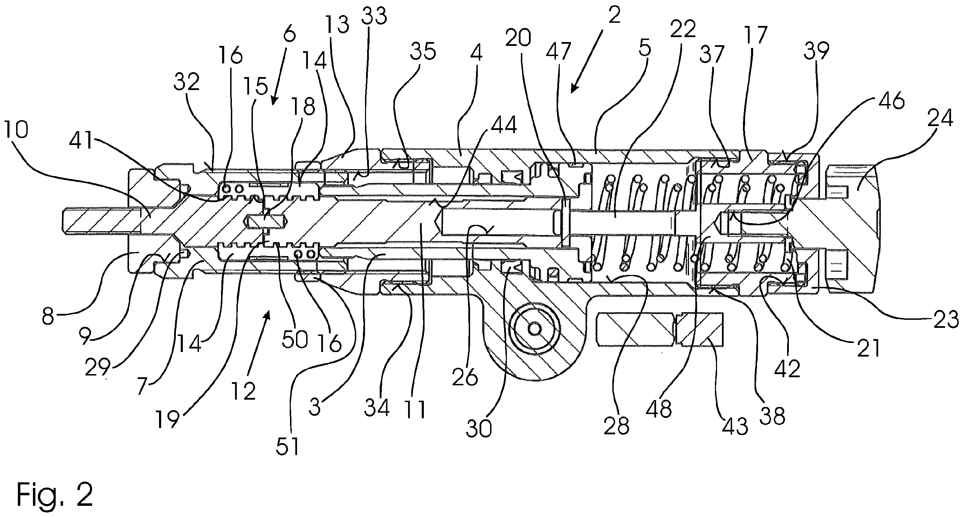

In den Figuren 1 und 2 ist ein Ausführungsbeispiel eines Nietwerkzeugs 1 in einer Explosionsdarstellung (Fig. 1) und in einer Schnittansicht (Fig. 2) dargestellt.

Das Nietwerkzeug 1 weist als zentrales Bauelement eine Antriebseinheit 2 auf, welche ein Gehäuse 4 sowie ein in dem Gehäuse 4 zwischen einer Ausgangsposition und einer Endposition verstellbar gelagerten Antriebskolben 3 aufweist. Die Verstellung des Antriebskolbens 3 erfolgt dabei hydraulisch, wobei der Antriebskolben 3 im Bereich eines Zylinderabschnitts 5 des Gehäuses 4 innerhalb des Gehäuses 4 an einer Zylinderinnenfläche 28 flüssigkeitsdicht gelagert ist, so dass eine Druckbeaufschlagung des Antriebskolbens 3 über eine an einen Anschlussstutzen 43 anschließbare, hier nicht dargestellte Hydraulikleitung, eine Verlagerung des Antriebskolbens 3 aus der in Fig. 1 dargestellten Ausgangsposition in eine hier nicht dargestellte Endposition bewirkt. Zur Abdichtung des mit Hydraulikflüssigkeit beaufschlagbaren Zylinderabschnitts 5 des Gehäuses 4 ist innerhalb des Gehäuses 4 eine Ringdichtung 30 zur Abdichtung gegenüber dem Antriebskolben 3 und an dem Antriebskolben 3 eine an der Zylinderinnenfläche 28 anliegende Ringdichtung 47 angeordnet.

Der Antriebskolben 3 dient zur Verstellung eines Zugdorns 11, welcher über eine Kopplungseinheit 12 lösbar mit einem Ziehwerkzeug 10 in Längsachsenrichtung sowie in Umfangsrichtung formschlüssig verbunden ist. Der Zugdorn 11 erstreckt sich dabei innerhalb einer Durchgangsöffnung 44 des Antriebskolbens 3 wobei die Einschubtiefe des Zugdorns 11 in den Antriebskolben 3 durch einen dem Antriebskolben 3 zugewandten Flansch begrenzt ist, der in der montierten Lage in Längsachsenrichtung an eine Anschlagfläche des Antriebskolbens 3 anliegt. Zur in Längsachsenrichtung und Umfangsrichtung formschlüssigen Verbindung des Zugdorns 11 mit dem Ziehwerkzeug 10 über die Kopplungseinheit 12 weisen der Zugdorn 11 und das Ziehwerkzeug 10 in einem mit der Kopplungseinheit 12 in Kontakt befindlichen Verbindungsabschnitt ringförmig umlaufende Vorsprünge 41 auf. Zwei zur Bildung der Kopplungseinheit 12 verwendete Koppelhalbschalen 14 weisen im montierten Zustand nach innen vorstehende Nuten 15 und Stege 50 auf, welche in die zwischen den Vorsprüngen 41 angeordneten Nuten von Zugdorn 11 und Ziehwerkzeug 10 eingreifen und somit in Längsachsenrichtung eine formschlüssige Verbindung herstellen. Im montierten Zustand ist die Position der Koppelhalbschalen 14 zudem über an einer Koppelhalbschale 14 angeordnete, hier nicht dargestellte Stifte gesichert, die in Stiftaufnahmen 16 der anderen Koppelhalbschale 14 eingreifen.

Zur verdrehsicheren Verbindung von Zugdorn 11 und Ziehwerkzeug 10 weisen diese in dem einander zugewandten Kontaktbereich miteinander in Eingriff stehende, quer zur Längsachsenrichtung verlaufende Stege 19 und Nuten 40 auf, wobei die Stege 19 kreuzförmig an der dem Ziehwerkzeug 10 zugewandten Stirnseite angeordnet sind und das Ziehwerkzeug 10 an seiner dem Zugdorn 11 zugewandten Stirnseite entsprechend kreuzförmig ausgebildete Nuten 40 aufweist. Im montierten Zustand dient ein von der Stirnfläche des Zugdorns 11 in Richtung auf das Ziehwerkzeug 10 vorstehende Zentrierstift 18 ferner dazu, die Position des Ziehwerkzeugs 10 gegenüber dem Zugdorn 11 zu sichern, wobei das Ziehwerkzeug 10 in einer entsprechend ausgebildete Bohrung des Ziehwerkzeugs 10 eingreift. Zur Führung des Ziehwerkzeugs 10 zwischen der der Nietaufnahmeposition und der Setzposition des Zugdorns 11 zugeordneten Position ist das Nietwerkzeug 10 mit einer eine Führungseinheit 6 bildenden Führungshülse 7 versehen, die innenseitig an den Durchmesser der Kopplungseinheit 12 angepasst ist und so als Linearführung dient. Die Führungshülse 7 ist dabei über ein Außengewinde 32 an einem Innengewinde 33 einer Hülsenaufnahme 13 befestigt, welche über ein Außengewinde 34 an einem an dem Gehäuse 4 angeordneten Innengewinde 35 fixiert ist. Zur Lagesicherung des Führungshülse 7 an der Hülsenaufnahme 13 dient dabei ein Sicherungsring 51, welcher koaxial zur Führungshülse 7 angeordnet und an einer Stirnfläche der Hülsenaufnahme 13 anliegt.

Zur Aufnahme eines an das Ziehwerkzeug 10 angepassten Nietkopfs 8 weist die Führungshülse 7 eine Nietkopfaufnahme 9 auf, innerhalb derer ringförmig, koaxial zu einer Durchgangsöffnung mehrere Haltemagnete 29 angeordnet sind, die eine lösbare Befestigung des Nietkopfs 8 an der Führungshülse 7 ermöglichen.

Der lösbar mit dem Ziehwerkzeug 10 verbundene Zugdorn 11 bildet mit einem Führungsstift 22, einer Gewindehülse 23, einem Drehrad 24 und einer Schraubendruckfeder 21 eine im Normalbetrieb unlösbar verbundene Baueinheit. Der Zugdorn 11 weist dabei eine Bohrung 26 auf, innerhalb derer der Führungsstift 22 axial verschiebbar ist. Die axiale Verschiebbarkeit wird dabei über die Länge eines sich in Längsachsenrichtung durch den Führungsstift 22 erstreckenden Schlitz 25 bestimmt, wobei sich durch diesen Schlitz 25 ein mit dem Zugdorn 11 verbundener Sicherungsbolzen 20 erstreckt. Der Sicherungsbolzen 20 gewährleistet auch eine Übertragung der Drehbewegungen des Führungsstifts 22 auf den Zugdorn 11, wobei diese Drehbewegung dann auf das Ziehwerkzeug 10 übertragen wird.

Die Drehbewegung des Führungsstifts 22 wird dabei durch die Betätigung eines Drehrads 24 hervorgerufen, welches verdrehfest in einer Aufnahmeöffnung 46 eines Aufnahmeabschnitts 48 des Führungsstifts 22 angeordnet ist. Zur lösbaren Anordnung der Baueinheit aus Zugdorn 11, Führungsstift 22, Gewindehülse 23, Schraubendruckfeder 21 und Drehrad 24 an dem Gehäuse 4 weist die Gewindehülse 23 ein Innengewinde 42 auf, das auf ein Außengewinde 39 einer Adapterbuchse 17 aufschraubbar ist, wobei die Adapterbuchse 17 mit einem weiteren Außengewindeabschnitt 38 in ein Innengewinde 37 des Gehäuses 4 einschraubbar ist. Über die Adapterbuchse 17 lassen sich somit unterschiedliche, einen Zugdorn 11 aufweisende Baueinheiten mit einem einheitlichen Gehäuse 4 eines Nietwerkzeugs 1 kombinieren. Die Schraubendruckfeder 21 ist einenends an eine Innenfläche der Gewindehülse 23 und anderenends an einem Flansch des Zugdorns 11 abgestützt. Im montieren Zustand spannt die Schraubendruckfeder 21 somit den Zugdorn 11 in Richtung auf den Antriebskolben 3 vor. Eine Verschiebung des Antriebskolbens 3 sowie des mit dem Antriebskolben 3 formschlüssig in Längsachsenrichtung verbundenen Zugdorns 11 aus der Ausgangsposition in die Endposition erfolgt somit entgegen der Federkraft der Schraubendruckfeder 21.

**Bezugszeichenliste**

| | | | |
|---|---|---|---|
| 1 | Nietwerkzeug | 29 | Haltemagnet |
| 2 | Antriebseinheit | 30 | Ringdichtung |
| 3 | Antriebskolben | 32 | Außengewinde |
| 4 | Gehäuse | 33 | Innengewinde |
| 5 | Zylinderabschnitt | 34 | Außengewinde |
| 6 | Führungseinheit | 35 | Innengewinde |
| 7 | Führungshülse | 37 | Innengewinde |
| 8 | Nietkopf | 38 | Außengewinde |
| 9 | Nietkopfaufnahme | 39 | Außengewinde |
| 10 | Ziehwerkzeug | 40 | Nuten |
| 11 | Zugdorn | 41 | Vorsprünge |
| 12 | Kopplungseinheit | 42 | Innengewinde |
| 13 | Hülsenaufnahme | 43 | Anschlussstutzen |
| 14 | Koppelhalbschale | 44 | Durchgangsöffnung |
| 15 | Nuten | 46 | Aufnahmeöffnung |
| 16 | Stiftaufnahme | 47 | Ringdichtung |
| 17 | Adapterbuchse | 48 | Aufnahmeabschnitt |
| 18 | Zentrierstift | 50 | Stege |
| 19 | Stege | 51 | Sicherungsring |
| 20 | Sicherungsbolzen | | |
| 21 | Schraubendruckfeder | | |
| 22 | Führungsstift | | |
| 23 | Gewindehülse | | |
| 24 | Drehrad | | |
| 25 | Schlitz | | |
| 26 | Bohrung | | |
| 28 | Zylinderinnenfläche | | |

## Patentansprüche

1. Nietwerkzeug (1) zum Setzen von Blindnietmuttern und/ oder Blindnietschrauben, mit
- einem hydraulisch zwischen einer Ausgangsposition und einer Endposition verstellbaren Antriebskolben (3) und
- einem mit dem Antriebskolben in Wirkverbindung befindlichen, zwischen einer Nietaufnahmeposition und einer Setzposition verstellbaren Zugdorn (11), wobei
eine Kopplungseinheit (12), ein an die Blindnietmutter und/ oder Blindnietschraube angepasstes Ziehwerkzeug (10) sowie der Zugdorn (11) zur in Längsachsen- und Umfangsrichtung lösbaren formschlüssigen Verbindung des Zugdorns (11) mit dem Ziehwerkzeug (10) ausgebildet sind,
**dadurch gekennzeichnet, dass** die Kopplungseinheit (12) zwei Koppelhalbschalen (14) aufweist, die zur in Längsachsenrichtung formschlüssigen Verbindung des Zugdorns (11) mit dem Ziehwerkzeug (10) ausgebildet sind, wobei
- der Zugdorn (11) und das Ziehwerkzeug (10) axial zu den ringförmig angeordneten Koppelhalbschalen (14) verlaufen.

2. Nietwerkzeug nach Anspruch 1, **dadurch gekennzeichnet, dass** der Zugdorn (11) und das Ziehwerkzeug (10) in einem Koppelabschnitt ringförmig umlaufende Nuten (40) und die Koppelhalbschalen (14) mit den Nuten (40) in Eingriff bringbare Stege (50) aufweisen.

3. Nietwerkzeug nach Anspruch 1 oder 2, **dadurch gekennzeichnet, dass** im Kontaktbereich von Ziehwerkzeug (10) und Zugdorn (11) an dem einen von Ziehwerkzeug (10) und Zugdorn (11) ein quer zur Längsachsenrichtung verlaufender Steg (19) und an dem anderen von Ziehwerkzeug (10) und Zugdorn (11) eine korrespondierend ausgebildete, quer zur Längsachsenrichtung verlaufende Nut (40) angeordnet ist.

4. Nietwerkzeug nach einem der vorhergehenden Ansprüche, **dadurch gekennzeichnet, dass** im Kontaktbereich ein mit dem Ziehwerkzeug (10) und dem Zugdorn (11) in Eingriff bringbarer Zentrierstift (18) angeordnet ist.

5. Nietwerkzeug nach einem der vorhergehenden Ansprüche, **dadurch gekennzeichnet, dass** der Zugdorn (11) in Richtung auf die Nietaufnahmeposition und/ oder der Antriebskolben (3) in Richtung auf die Ausgangsposition vorgespannt ist.

6. Nietwerkzeug nach einem der vorhergehenden Ansprüche, **dadurch gekennzeichnet, dass** der Zugdorn (11) in einer Durchgangsöffnung (44) des Antriebskolbens (3) angeordnet und in Richtung auf die Nietaufnahmeposition formschlüssig mit diesem verbunden ist.

7. Nietwerkzug nach einem der vorhergehenden Ansprüche, **dadurch gekennzeichnet, dass** der Zugdorn (11) zur in Längsachsenrichtung verschiebbaren und verdrehfesten Verbindung mit einem mit einem Drehrad (24) verbundenen Führungsstift (22) ausgebildet ist.

8. Nietwerkzeug nach einem der vorhergehenden Ansprüche, **dadurch gekennzeichnet, dass** die Koppelhalbschalen (14) in einer an einem Gehäuse (4) angeordneten Führungshülse (7) verschiebbar gelagert sind.

9. Nietwerkzeug nach Anspruch 8, **dadurch gekennzeichnet, dass** die Führungshülse (7) eine Nietkopfaufnahme (9) mit in der Nietkopfaufnahme (9) angeordneten Haltemagneten (29) aufweist.

10. Nietwerkzeug nach einem der vorhergehenden Ansprüche, **dadurch gekennzeichnet, dass** das mit einer Hydraulikleitung verbindbare und zur Führung des Antriebskolbens (3) eine Zylinderinnenfläche (28) aufweisende Gehäuse (4) einerseits oder beiderseits ein Innengewinde (35, 37) aufweist.

## Claims

1. A riveting tool (1) for setting blind rivet nuts and/or blind rivet screws with
- a drive piston (3) hydraulically adjustable between a starting position and an end position and
- a pull rod (11) operationally connected with the drive piston and adjustable between a rivet receiving position and a setting position,
wherein
a coupling unit (12), a tractive tool (10) adjusted for the blind rivet nut and/or blind rivet screw as well as the pull rod (11) are designed for the form-fitting connection of the pull rod (11) with the tractive tool (10), which is releasable in the direction of the longitudinal axis and in the circumferential direction,
**characterized in that** the coupling unit (12) has two coupling half shells (14) that are designed for the form-fitting connection of the pull rod (11) with the tractive tool (10) in the direction of the longitudinal axis, wherein
- the pull rod (11) and the tractive tool (10) progress axially with respect to the annularly arranged coupling half shells (14).

2. The riveting tool according to claim 1, **characterized in that** the pull rod (11) and the tractive tool (10) have in a coupling section annularly circumferential grooves (40) and the coupling half shells (14) have webs (50) that can be brought to engage with the grooves (40).

3. The riveting tool according to claim 1 or 2, **characterized in that** a web (19) progressing transversely to the direction of the longitudinal axis is arranged on one of the tractive tool (10) and pull rod (11) in the contact area of the tractive tool (10) and pull rod (11) and a correspondingly designed groove (40) progressing transversely to the direction of the longitudinal axis is arranged on the other of the tractive tool (10) and pull rod (11).

4. The riveting tool according to one of the preceding claims, **characterized in that** a centering pin (18) that can be brought to engage with the tractive tool (10) and the pull rod (11) is arranged in the contact area.

5. The riveting tool according to one of the preceding claims, **characterized in that** the pull rod (11) is pretensioned in the direction towards the rivet receiving position and/or the drive piston (3) in the direction towards the starting position.

6. The riveting tool according to one of the preceding claims, **characterized in that** the pull rod (11) is arranged in a through opening (44) of the drive piston (3) and is connected with it in a form-fitting manner in the direction towards the rivet receiving position.

7. The riveting tool according to one of the preceding claims, **characterized in that** the pull rod (11) is designed for the displaceable and torque-proof connection in the direction of the longitudinal axis with a guide pin (22) connected with a rotary wheel (24).

8. The riveting tool according to one of the preceding claims, **characterized in that** the coupling half shells (14) are movably mounted in a guide sleeve (7) arranged on a housing (4).

9. The riveting tool according to claim 8, **characterized in that** the guide sleeve (7) has a rivet head receiver (9) with holding magnets (29) arranged in the rivet head receiver (9).

10. The riveting tool according to one of the preceding claims, **characterized in that** the housing (4) that is connectable with a hydraulic line and that has a cylindrical inner surface (28) for guiding the drive piston (3) has an internal thread (35, 37) on one or both sides.

## Revendications

1. Outil de rivetage (1)
pour poser des écrous à sertir en aveugle et/ou des boulons à sertir en aveugle, doté
- d'un piston d'entraînement (3) réglable par voie hydraulique entre une position initiale et une position finale, ainsi que
- d'une tige de traction (11) se trouvant en liaison fonctionnelle avec le piston d'entraînement, réglable entre une position de réception du rivet et une position de pose,
dans lequel
une unité de couplage (12), un outil de traction (10) adapté à l'écrou à sertir en aveugle et/ou au boulon à sertir en aveugle ainsi que la tige de traction (11) sont conçus de manière à réaliser la liaison par complémentarité de forme amovible de la tige de traction (11) dans le sens de l'axe longitudinal et de la circonférence avec l'outil de traction (10),
**caractérisé en ce que** l'unité de couplage (12) présente deux demi-coquilles de couplage (14), qui sont conçues de manière à réaliser la liaison par complémentarité de forme de la tige de traction (11) dans le sens de l'axe longitudinal avec l'outil de traction (10), dans lequel
- la tige de traction (11) et l'outil de traction (10) suivent un trajet axial par rapport aux demi-coquilles de couplage (14) disposées en anneau.

2. Outil de rivetage selon la revendication 1, **caractérisé en ce que** la tige de traction (11) et l'outil de traction (10) présentent des rainures périphériques annulaires (40) dans un segment de couplage et que les demi-coquilles de couplage (14) présentent des nervures (50) pouvant être mises en prise avec les rainures (40).

3. Outil de rivetage selon la revendication 1 ou 2, **caractérisé en ce que** dans la zone de contact de l'outil de traction (10) et de la tige de traction (11), une nervure (19) s'étendant transversalement par rapport à la direction de l'axe longitudinal est disposée sur l'un desdits outil de traction (10) et tige de traction (11) et une rainure (40) conçue de manière correspondante s'étendant transversalement par rapport à la direction de l'axe longitudinal est disposée sur l'autre desdits outil de traction (10) et tige de traction (11).

4. Outil de rivetage selon l'une des revendications précédentes, **caractérisé en ce qu'**un axe de centrage (18) pouvant être mis en prise avec l'outil de traction (10) et avec la tige de traction (11) est disposé dans la zone de contact.

5. Outil de rivetage selon l'une des revendications précédentes, **caractérisé en ce que** la tige de traction (11) est prétendue en direction de la position de réception du rivet et/ou le piston d'entraînement (3) est prétendu en direction de la position initiale.

6. Outil de rivetage selon l'une des revendications précédentes, **caractérisé en ce que** la tige de traction (11) est disposée dans une ouverture de passage (44) du piston d'entraînement (3) et est reliée avec celui-ci par complémentarité de forme en direction de la position de réception du rivet.

7. Outil de rivetage selon l'une des revendications précédentes, **caractérisé en ce que** la tige de traction (11) est conçue pour la liaison solidaire en rotation et déplaçable dans la direction de l'axe longitudinal avec un axe de guidage (22) relié à un bouton rotatif (24).

8. Outil de rivetage selon l'une des revendications précédentes, **caractérisé en ce que** les demi-coquilles de couplage (14) sont montées de manière à pouvoir coulisser dans une douille de guidage (7) disposée contre un boîtier (4).

9. Outil de rivetage selon la revendication 8, **caractérisé en ce que** la douille de guidage (7) présente un logement de tête de rivet (9) avec des aimants de maintien (29) disposés dans le logement de la tête de rivet (9).

10. Outil de rivetage selon l'une des revendications précédentes, **caractérisé en ce que** le boîtier (4) présentant une surface intérieure cylindrique (28) pour guider le piston d'entraînement (3) et pouvant être relié à une conduite hydraulique comporte un filetage intérieur (35, 37) d'un côté ou des deux côtés.
